(19) Europäisches Patentamt
European Patent Office
Office européen des brevets

(11) Publication number: **0 198 498**
**B1**

(12) # EUROPEAN PATENT SPECIFICATION

(45) Date of publication of patent specification: **24.10.90**

(51) Int. Cl.[5]: **C 08 L 63/00,** C 08 L 67/04

(21) Application number: **86105321.3**

(22) Date of filing: **17.04.86**

(54) **Blends of polycaprolactone polyols and polyepoxides.**

(30) Priority: **17.04.85 US 724209**

(43) Date of publication of application:
**22.10.86 Bulletin 86/43**

(45) Publication of the grant of the patent:
**24.10.90 Bulletin 90/43**

(84) Designated Contracting States:
**BE CH DE FR GB IT LI LU NL SE**

(56) References cited:
**EP-A-0 051 311**
**EP-A-0 117 538**

(73) Proprietor: **UNION CARBIDE CORPORATION**
**39 Old Ridgebury Road**
**Danbury Connecticut 06817 (US)**

(72) Inventor: **Spurr, Orson Kirk**
**1270 Cornell Road**
**Bridgewater New Jersey (US)**

(74) Representative: **Wuesthoff, Franz, Dr.-Ing. et al**
**Wuesthoff & Wuesthoff Patent- und Rechtsanwälte Schweigerstrasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

This invention relates to liquid blends of polycaprolactone polyols and cycloaliphatic epoxides.

Blends of cycloaliphatic epoxides and polycaprolactone polyols have widespread use in the manufacture of insulating components for electrical equipment. These blends are provided in filled and unfilled cured epoxy formulations which are used to impregnate electrical windings, cast or mold electrical insulators, encapsulate conductive metal rods and nonconductive members, and pot various electrical devices. The epoxide components of the blends impart to the cured products good electrical properties, including low dielectric loss, high resistivity and good arc and tracking resistance. The polycaprolactone polyol components of the blends improve the mechanical properties of the cured products.

It has been known that polycaprolactone polyols may be used as flexibilizers to enhance the thermal shock resistance of cured epoxide resins. Thermal shock resistance is a measure of a cured resin's ability to withstand rapid temperature fluctuations without cracking. In electrical applications cured epoxide resins are often in contact with metals. With changes in temperature the cured epoxide resins expand and contract. As a result of the difference in the thermal coefficients of expansion between the resins and the metals they contact, stress is produced which causes cracks to develop in the cured resin system. Polycaprolactone polyols impart a degree of elasticity to the epoxides, improving a cured epoxy resin's ability to withstand repeated cycles of high and low temperatures without cracking.

Illustrative of prior art regarding the use of blends of epoxides and polycaprolactone polyols are the following: U.S. Patent No. 3,699,070, which discloses an epoxy composition flexibilized with polycaprolactone polyols and U.S. Patent No. 4,434,286 which discloses a curable composition comprising a cycloaliphatic epoxide and a polyol having a molecular weight of from about 1,000 to about 4,000, e.g. polycaprolactone polyols (see col. 4, line 3 to col. 5, line 16). The cured compositions disclosed by U.S. Patent No. 4,434,286 are described as having high thermal shock resistance values and good combinations of mechanical and electrical properties.

Blends of cycloaliphatic epoxides and/or diepoxides with polycaprolactone polyols are commercially available. ERRA™-4090, available from Union Carbide Corporation, and Finelex™-090, available from Fine Polymers, are two such compositions. Both of these blends contain a polycaprolactone polyol having a molecular weight of about 1250, and are waxy solids at 25°C.

Polycaprolactone polyols are typically prepared by the ring opening reaction of a caprolactone with an organic polyfunctional initiator. It has been determined that the percentage of caprolactone derived hydroxyl groups as opposed to initiator derived hydroxyl groups in a given polycaprolactone polyol product (reported as the percent lactone hydroxyl value or PLH) determines whether the polyol will, when used as a flexibilizer in conjunction with a cycloaliphatic epoxide, maximize the contribution of the flexibilizer to the cured epoxide's thermal shock resistance. Also, it has been found that by maximizing the extent of reaction of the lactone with initiator, the resultant lactone polyol is primarily chain capped with lactone derived hydroxyl groups formed by the ring opening addition reaction of the lactone, and that this narrows significantly the molecular weight distribution of the resultant polyol. Polyols of narrow molecular weight distribution tend to have lower melting points than polyols having a broader molecular weight distribution. These polyols are more particularly describefd in the Applicant's EP—A—0 117 538. The lower melting points of the above described polyols allows them to be easily and conveniently blended with cycloaliphatic epoxides at relatively convenient temperatures. These blends are further characterized by their ability to remain essentially liquid (as hereinafter defined) at temperatures of about 25°C.

Additionally, it has been determined that the use in an epoxy resin system of a narrower molecular weight caprolactone polyol, having less of higher and lower molecular weight polyols, contributes to increasing a cured resin's thermal shock resistance. Without wishing to be bound to theory, it is postulated that lower molecular weight polyols provide shorter, less flexible cross linkages than higher molecular weight polyols. The greater number of shorter linkages provided by a poly having a broader molecular weight distribution contributes to an uneven distribution of stress in a cured resin making the cured resin more susceptible to reduced thermal shock resistance.

The Invention

This invention is directed to a curable composition which comprises a blend of a cycloaliphatic epoxide and a polycaprolactone polyol having a molecular weight of from about 500 to about 4,000, produced by the ring opening reaction of a lactone with a polyfunctional initiator, wherein the minimum percent of lactone hydroxyls, defined as y, in the polycaprolactone polyol is a function of the mole ratio, x, of lactone units to active hydrogens in the initiator, and is defined as $y = 52.5x$ for $x > 0$ to 1.5 and $y = 2.11x + 75.6$ for $x > 1.5$, wherein the composition is essentially liquid (i.e. forms a slurry-like composition having suspended therein soft, finely divided low melting precipitate which lack a definite particulate structure) at 25°C. The solids which precipitate from the composition are easily returned to uniform suspension by mixing, or to solution by very mild heating. In many cases the thermal shock resistance provided by the blends of this invention is superior to that provided by compositions which contain the same epoxide component and an otherwise identical polycaprolactone polyol of the same molecular weight, having fewer lactone hydroxyls incorporated therein.

Suitable cycloaliphatic epoxides for purposes of this invention are those having an average of more than one vicinal epoxy group per molecule. The epoxy groups can be terminal epoxy groups or internal epoxy groups as exemplified by the cycloaliphatic epoxides which are subsequently described. Particularly desirable cycloaliphatic epoxides are the cyclohexane diepoxides, that is epoxides having at least one vicinal epoxy group.

Illustrative of suitable cycloaliphatic epoxides are the following:

Formula I

Diepoxides of cycloaliphatic esters of dicarboxylic acids having the formula:

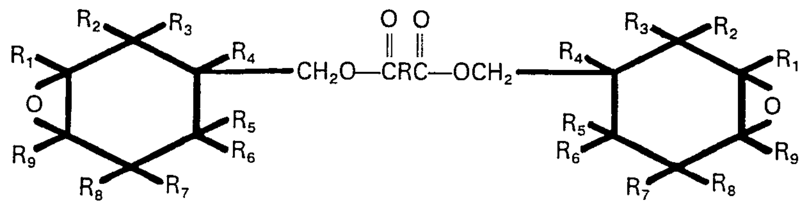

wherein $R_1$ through $R_9$, which can be the same or different are hydrogen or alkyl radicals generally containing one to nine carbon atoms inclusive and preferably containing one to three carbon atoms inclusive as for example methyl, ethyl, n-propyl, n-butyl, n-hexyl, 2-ethylhexyl, n-octyl, n-nonyl and the like; R is a valence bond or a divalent hydrocarbon radical generally containing one to nine carbon atoms inclusive and preferably containing four to six carbon atoms inclusive, as for example, alkylene radicals, such as trimethylene, tetramethylene, pentamethylene, hexamethylene, 2-ethylhexamethylene, octamethylene and nonamethylene; cycloaliphatic radicals, such as 1,4-cyclohexane, 1,3-cyclohexane and 1,2-cyclohexane.

Particular desirable epoxides, falling within the scope of Formula I, are those wherein $R_1$ through $R_9$ are hydrogen and R is alkylene containing four to six carbon atoms.

Among specific diepoxides of cycloaliphatic esters of dicarboxylic acids are the following:

bis(3,4-epoxycyclohexylmethyl)oxalate,
bis(3,4-epoxycyclohexylmethyl)adipate,
bis(3,4-epoxy-6-methylcyclohexylmethyl)adipate,
bis(3,4-epoxycyclohexylmethyl)pimelate.

Other suitable compounds are described in U.S. Pat. No. 2,750,395 to B. Phillips et al.

Formula II

A 3,4-epoxycyclohexylmethyl-3,4-epoxycyclohexane carboxylate having the formula:

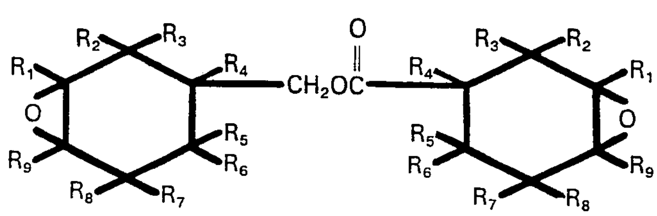

wherein $R_1$ through $R_9$ which can be the same or different are as defined for $R_1$ in formula I. Particularly desirable compounds are those wherein $R_1$ through $R_9$ are hydrogen.

Among specific compounds falling with the scope of Formula II are the following:

3,4-epoxycyclohexylmethyl-3,4-epoxycyclohexanecarboxylate,
3,4-epoxy-1-methylcyclohexylmethyl-3,4-epoxy-1-methylcyclohexanecarboxylate,
6-methyl-3,4-epoxycyclohexylmethyl-6-methyl-3,4-epoxycyclohexanecarboxylate,
3,4-epoxy-3-methylcyclohexylmethyl-3,4-epoxy-3-methylcyclohexanecarboxylate,
3,4-epoxy-5-methylcyclohexylmethyl-3,4-epoxy-5-methylcyclohexanecarboxylate;
3,4-epoxycyclohexylmethyl-3,4-epoxycyclohexanecarboxylate being particularly desirable.

Other suitable compounds are described in U.S. Pat. No. 2,890,194 to B. Phillips et al.

Formula III

diepoxides having the formula:

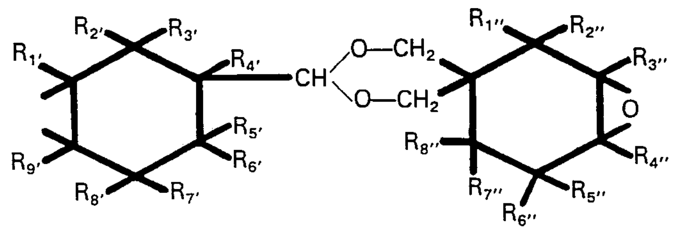

wherein the R single and double primes, which can be the same or different, are monovalent substituents such as hydrogen, halogen, i.e. chlorine, bromine, iodine or fluorine, or monovalent hydrocarbon radicals, or radicals as further defined in U.S. Pat. No. 3,318,822 to Hans Batzer et al. issued May 9, 1967. Particularly desirable compounds are those wherein all the R's are hydrogen.

Other suitable cycloaliphatic epoxides are the following:

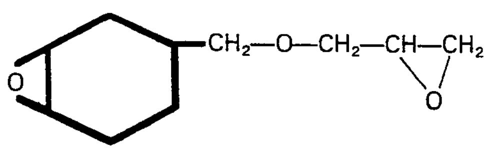

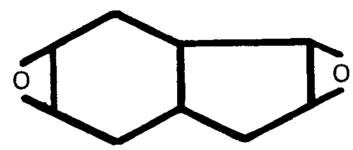

The preferred cycloaliphatic epoxides are the following:
3,4-Epoxycyclohexylmethyl-3,4-Epoxy-cyclohexane carboxylate

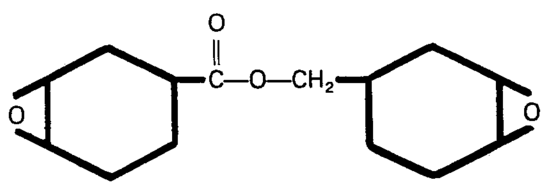

Bis-(3,4-Epoxycyclohexylmethyl)Adipate

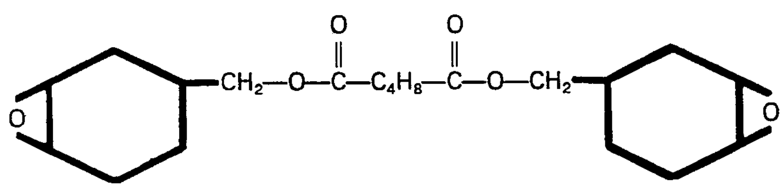

2-(3,4-Epoxycyclohexyl-5,5-spiro-3,4-epoxy)-cyclohexane-meta-dioxane

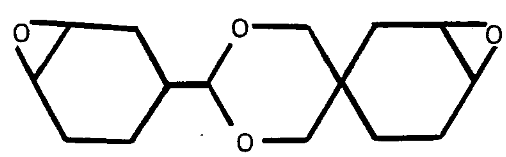

vinyl cyclohexene dioxide

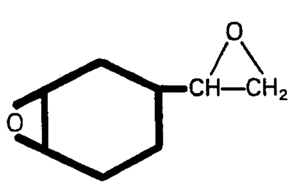

or mixtures thereof.

Epoxides with six membered ring structures may also be used, such as partially hydrogenated phthalic acid or fully hydrogenated phthalic acid. Diglycidyl esters of hexahydrophthalic acids being preferred.

The polyester polyols suitable for use in this invention are those polyols hereinafter termed "Kinetic" polyols more particularly described in the Applicant's EP—A—0 117 538, which produce essentially liquid blends with cycloaliphatic epoxides.

The polyols are produced by the ring opening reaction of a caprolactone with an organic polyfunctional initiator. The reaction is preferably conducted in the presence of from 0.1 to 50 parts per million by weight, based on the total weight of the lactone, of a ring opening catalyst such as stannous octanoate, diethylene dilaurate, tetraisopropyl titanate and butyl titanate, etc. The reaction is conducted at a temperature of from 140 to 170°C for a period of from 3 to 8 hours. It is important to avoid extended reaction times and excessive reaction temperatures which lead to a gradual decrease in the percent of lactone hydroxyl groups. Preparation of the polyols requires control of the reaction conditions and termination of the reaction when the level of unreacted lactone monomer initially reaches about 1 mole percent or less of the original lactone charge.

The lactones suitable for producing the polyols used herein are caprolactones having the formula:

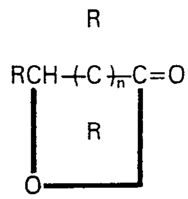

wherein n is four and wherein the R's are independently selected from hydrogen, alkyl, cycloalkyl, alkoxy, halogen or single ring aromatic hydrocarbon radicals. Preferably the caprolactone is epsilon caprolactone, or a methyl epsilon-caprolactone, or a mixture of isomeric methyl epsilon-caprolactones, or a mixture of one or more isomeric methyl epsilon-caprolactones with epsilon caprolactone.

Table I below lists the compositions and various properties of a number of commercially available polycaprolactone polyols as well as the above described Kinetic polyols. The Capa⊙ polyols are available from Interox Chemicals Ltd. and the Tone⊙ polyols are available from Union Carbide Corporation.

TABLE 1
Caprolactone Polyol Compositions

| Polyol | Average Molecular Weights | Initiator | Initiator Mole Percents* unsub-stituted | monosub-stituted | disub-stituted | Mole Ration of Lectone Units to Active Hydrogens in the Initiator | % Lacton Hydroxyls | Measured Melting Point °C |
|---|---|---|---|---|---|---|---|---|
| Tone ® 0210 | 830 | Diethylene Glycol | 14 | 45 | 41 | 3.2 | 64 | 44—49 |
| Capa® 205 | 830 | Diethylene Glycol | 4 | 32 | 64 | 3.2 | 80 | —— |
| Kinetic I | 830 | Diethylene Glycol | 0 | 20 | 80 | 3.2 | 90 | 31—36 |
| Capa® 210 | 1000 | Neopentyl Glycol | 7 | 49 | 45 | 3.9 | 68 | —— |
| Tone® 0203 | 1250 | Diethylene Glycol | 6 | 39 | 55 | 10.0 | 75 | 50—55 |
| Capa® 215 | 1250 | Diethylene Glycol | 0 | 33 | 67 | 10.0 | 83 | 39—45 |
| Kinetic II | 1250 | Diethylene Glycol | 0 | 9 | 91 | 10.0 | 96 | 39—44 |

* Values were determined by analysis of NMR spectra of the various polyols

Polyfunctional initiators used to produce kinetic polyols are represented by the general formula:

$$R'(YH)_a$$

in which R' is an organic radical selected from the group consisting of aliphatic, cycloaliphatic, aromatic and heterocyclic radicals, a is a number equal to the functionality of the initiator, and the Y is selected from —O—, —NH—, —NR²— ($R^2$ is selected from alkyl, aryl, aralkyl or cycloalkyl), —S—, and —C(O)O.

Organic polyols in which the YH groups are hydroxyl groups, include the following:

ethylene glycol, diethylene glycol, 2,2,4-trimethyl-1,3-pentanediol, dipropylene glycol, propylene glycol, triethylene glycol, 1,4-cyclohexane dimethanol, neopentyl glycol, 2,2-dimethyl-3-hydroxypropyl-2,2-dimethyl-3-hydroxy-propionate, the ethylene and propylene oxide adducts of 2,2-dimethyl-3-hydroxypropyl-2,2-dimethyl-3-hydroxypropionate, triethanolamine, 1,3-butanediol, tetraethylene glycol, 2,2-bis(4-hydroxyphenyl) propane and the ethylene and propylene oxide adducts of 2,2-bis(4-hydroxyphenyl)propane, low molecular weight polymeric polyols derived from ethylene oxide or propylene oxide or tetrahydrofuran (e.g., polytetramethylene glycols such as Polymeg 650), pentaerythritol, erythritol, glycerine, trimethylolpropane, 1,4-butanediol, 1,6-hexanediol.

It has been found that not all kinetic polyols produce liquid blends with cycloaliphatic epoxides. For example, a polyol/epoxide blend containing 70 weight percent of a polycaprolactone polyol having a molecular weight of about 1250 initiated by diethylene glycol may be a liquid at 25°C whereas, a polyol/epoxide blend having the same epoxide component and containing equal amounts of an otherwise identical polycaprolactone polyol initiated by 1,4 butane diol may be a waxy solid. It is, therefore, critical that the initiator chosen produces a polyol which may be blended with a cycloaliphatic epoxide to form a liquid composition at a desired concentration. It is not precisely known what effect all of the above cited initiators have on the polyols produced thereby. For purposes of this invention, particularly preferred initiators are diethylene glycol and neopentyl glycol.

The polyols particularly well suited for use herein are low melting polycaprolactone polyols having a molecular weight of from about 800 to about 2,000, preferably from about 1,200 to 1,300 produced by the reaction of diethylene glycol with caprolactone. A polycaprolactone polyol having a PLH value of at least about 96, produced by the ring opening reaction of caprolactone with diethylene glycol, is especially desired.

It should also be noted that the concentration of the polyol component in a polycaprolactone/cycloaliphatic epoxide blend affects the melting point and thus the physical state of the blend. As a general rule, polyols of higher molecular weight form solids with cycloaliphatic epoxides at lower polyol concentrations than polyols having lower molecular weights. It is required that the blends of this invention be essentially liquid at 25°C.

In one embodiment, the compositions of this invention are suitable for use as modifiers, which are commercially provided as concentrates to be further blended with cycloaliphatic epoxides. These compositions contain a minimum of 30 percent by weight of polycaprolactone polyol, based on the total weight of the polyol and epoxide components. A composition containing from 30 to 50 percent by weight, based on the total weight of the polyol and epoxide components of cycloaliphatic epoxide and from 50 to 70 percent by weight, based on the total weight of the polyol and epoxide components, of polycaprolactone polyol is preferred; compositions containing 30 to 35 percent by weight of a cycloaliphatic epoxide and 70 to 65 percent by weight of a polycaprolactone polyol are especially preferred.

In another embodiment, the compositions of this invention are suitable for use in molding compositions. Molding compositions typically contain from 5 to 55 percent by weight, based on the total weight of the polyol and epoxide components, of polycaprolactone and from 45 to 95 percent, based on the total weight of the polyol and epoxide components, of cycloaliphatic epoxides. Compositions containing from 10 to 40 percent by weight of polycaprolactone and from 60 to 90 percent by weight of polycaprolactone are particularly desirable.

The compositions of this invention may be further blended with hardeners such as aliphatic, aromatic, and cycloaliphatic polycarboxylic acid anhydrides to effect cure.

Especially well suited for use herein are dicarboxylic acid anhydrides, particularly hydrocarbon dicarboxylic acid anhydrides which include the following: phthalic anhydride, tetrahydrophthalic anhydride, hexahydrophthalic anhydride, chlorendic anhydride, maleic anhydride, chloromaleic anhydride, dichloromaleic anhydride, glutaric anhydride, adipic anhydride, succinic anhydride, itaconic anhydride, heptylsuccinic anhydride, hexylsuccinic anhydride, methyltetrahydrophthalic anhydride, methylhexahydrophthalic anhydride, n-nonenylsuccinic anhydride, octenyl- succinic anhydride, penteneylsuccinic anhydride, propylsuccinic anhydride, citraconic anhydride, 4-nitrophthalic anhydride, 1,2-naphthalic anhydride, 2,3-naphthalic anhydride, 1,8-naphthalic anhydride, tetrabromophthalic anhydride and tetraiodophthalic anhydride.

Mixtures of anhydrides, polymeric anhydrides or mixed polymeric anhydrides of sebacic, adipic, pimelic, cyclohexane-1,4-dicarboxylic, terephthalic and isophthalic acids are also suitable for use herein. Polycarboxylic acid anhydrides, such as 1,2,4,5-benzenetetracarboxylic dianhydride and 1,5-dimethyl-2,3,4,6,7,8-hexahydronaphthalene-3,4,7,8-tetracarboxylic dianhydride can also be used. Especially

preferred hardeners are hexahydrophthalic anhydride, methyltetrahydrophthalic anhydride, methylhexahydrophthalic anhydride and methyl nadic anhydride.

The compositions of this invention may also contain curing catalysts such as metal and non-metal halide Lewis acids, tertiary amines, peroxides, ethylene glycol, fatty acids, acrylates of group IV—B metals, organotin compounds having at least one SN—C bond, and carboxylic acid salts of lead and manganese. Especially preferred curing catalysts are (2-hydroxyethyl)trimethyl ammonium hydroxide, benzyl dimethyl amine, and 2-methyl imidazole.

In addition, the compositions may also contain modifiers such as a dimer acid, for example Empol™ 1022 available from Emery Industries, which is a mixture of 3 percent mono, 75 percent dimer and 22 percent trimer acids made from unsaturated $C_{18}$ fatty acids; a carboxyl terminated butadiene acrylonitrile (80—20) random copolymer having a molecular weight of about 3300; fillers such as clay, silica, alumina, or aluminum trihydrater which may be coated with, for example, silanes, which fillers may be added in amounts of up to about 70 percent by weight; pigments such as carbon black; and mold release agents.

Cured compositions are generally prepared by mixing the polycaprolactone polyol, cycloaliphatic epoxide, hardener and other ingredients and heating the resultant mixture to temperatures of about 100°C to about 200°C for a period of about 1 to 6 hours depending on the temperature employed as well as upon the ratio and relative amounts of materials used.

The polycaprolactone polyol/cycloaliphatic epoxide blends of this invention may also be U.V. radiation cured.

## Examples

The following examples serve to illustrate the specific embodiments of this invention. It is not intended that the scope of the invention shall be limited by these examples. The designations which appear in the Examples and Tables below have the following meanings:

Epoxide: 3—4 epoxycyclohexylmethyl-3,4-epoxycyclohexane carboxylate

Polyol I: A diethylene glycol initiated polycaprolactone polyol having a molecular weight of about 1250 and a Percent Lactone Hydroxyl (PLH) value of about 75, obtained under the product designation Tone⊙ 0230

Polyol II: A diethylene glycol initiated polycaprolactone polyol having a molecular weight of about 1250 and a PLH value of about 83, obtained under the product designation Capa⊙ 215

Polyol III: A diethylene glycol initiated polycaprolactone polyol having a molecular weight of about 1250 and a PLH value of about 96.

Polyol IV: A 1,4-butane diol initiated polycaprolactone polyol having a molecular weight of about 1250 and a PLH value of about 96.

Polyol V: An diethylene glycol initiated polycaprolactone polyol having a molecular weight of about 2,000 and a PLH value of about 96.

HHPA: Hexahydrophthalic anhydride

MTHPA: Methyltetrahydrophthalic anhydride

MHHPA: Methylhexahydrophthalic anhydride

MNA: Methyl nadic anhydride

BDMA: Benzyldimethylamine

### Examples 1 to 10 and Comparative Examples $C_1$ to $C_6$

Various blends of epoxides and polyols were prepared by mixing the various components listed in Table II below. Prior to mixing, the polyol component of each was heated to temperatures of about 80°C to achieve liquidity. The physical state of the blends is provided below.

TABLE II

| Example | Polyol | Formulation: Epoxide (gms) | Formulation: Polyol (gms) | Physical State: After 24 hrs. | Physical State: After 1 month |
|---|---|---|---|---|---|
| $C_1$ | Polyol I | 70.0 | 30.0 | liquid | solid |
| $C_2$ | Polyol I | 50.0 | 50.0 | solid | solid |
| $C_3$* | Polyol I | 33.3 | 66.7 | solid | — |
| $C_4$ | Polyol I | 30.0 | 70.0 | solid | solid |
| $C_5$* | Polyol II | 33.3 | 66.7 | solid | — |
| 1 | Polyol III | 70.0 | 30.0 | liquid | liquid |
| 2 | Polyol III | 50.0 | 50.0 | liquid | liquid |
| 3* | Polyol III | 33.3 | 66.7 | liquid | — |
| 4 | Polyol III | 30.0 | 70.0 | liquid | liquid |
| $C_6$ | Polyol IV | 70.0 | 30.0 | solid | — |
| 5 | Polyol V | 70.00 | 30.0 | liquid | liquid |
| 6 | Polyol V | 50.00 | 50.00 | liquid | liquid |
| 7 | Polyol V | 30.00 | 70.00 | liquid | liquid |

* It should be noted that four formulations of the 1:2 blends of epoxide and polyol I, II and III were prepared. The data presented is representative of three of the four formulations. In one formulation, however, blends of all three polyols remained liquid after a period of one week. It is believed that the data presented is representative of typical blend behaviour and that the non-conforming formulation was abberational.

Example 8—10 and Comparative Examples $C_7$ to $C_9$

The thermal shock resistance of a series of ten cured resin discs for each of 6 resin systems, prepared using the epoxide, polyol, anhydride and curing catalyst quantities specified in Table III below, was measured according to the following test procedure: Uncured specimens of a given resin system were prepared by mixing the epoxide and polyol components of the system in a first container at a temperature of about 80°C; mixing the anhydride and during catalyst components of the system in a second container at a temperature of about 80°C; combining the contents of the two containers to form a blend; and pouring the resultant blend into 10 aluminum milk test evaporating dishes 5 cm. in diameter by 1 cm. deep, having a common steel washer positioned in their centers. The washers had outside diameters of 2.5 cm, inside diameters of 11 mm, weighed about 6.6 grams and were supported in the dishes by rings of filter paper 6.4 mm high cut from a Whatman single thickness cellulose extraction thimble. The uncured specimens were then heated in a circulating air oven at a temperature of about 100°C for about 2 hours to form resin discs. The discs were postcured at temperature of about 160°C for a period of about 4 hours. The cured discs were next subjected to a series of hot and cold temperature cycles of increasing severity. The initial upper temperature was 60°C and the initial lower temperature was 20°C. In succeeding cycles, the high temperature limit was increased by 20°C and the low temperature limit reduced by 10°C. The test was run through 10 cycles, the final cycle having a high temperature of 240°C and a low temperature of −70°C. Each hot temperature cycle ran for a period of 30 minutes in a circulating air oven while each cold temperature cycle ran for a period of 10 minutes in a dry ice-methanol bath. After each series of hot and cold cycles the disc was examined for cracks. Cycling of a specimen was discontinued when cracks were noted. The number of discs failing at a given cycle was recorded. The test was run on each series of ten replicate specimens simultaneously.

Thermal shock resistance (TSR) values are reported as an average cycles to fail rating for a series of ten replicate tests. The average cycles to fail rating is calculated by multiplying the cycle number (1 through 10) by the number of specimens that developed cracks at that cycle, adding together the resultant products for

each of the 10 cycles, and dividing that sum by 10. Specimens that develop cracks after molding, prior to being subjected to the first temperature cycle, are given failure rating values of zero. For purposes of interpretation, higher average cycles to failure rating values are indicative of systems which provide better thermal shock resistance.

TSR values for Examples 8 to 10 and Comparative Examples $C_7$ to $C_9$ are reported in Table III below.

TABLE III

| Example | $C_7$ | $C_8$ | $C_9$ | 8 | 9 | 10 |
|---|---|---|---|---|---|---|
| Formulation | | | | | | |
| Epoxide (gms) | 86.7 | 73.3 | 60.0 | 86.7 | 73.3 | 60.0 |
| Polyol I (gms) | 13.3 | 26.7 | 40.0 | — | — | — |
| Polyol III (gms) | — | — | — | 13.3 | 26.7 | 40.0 |
| HHPA (gms) | 87 | 73 | 60 | 87 | 73 | 60 |
| BDMA (gms) | 1 | 1 | 1 | 1 | 1 | 1 |
| Ethylene Glycol (gms) | 2 | 2 | — | 2 | 2 | — |
| Thermal Shock Resistance (TSR) | 0.0 | 4.3 | 7.0 | 0.0 | 4.3 | 7.4 |

Examples 11 to 14 and Comparative Examples $C_{10}$ to $C_{13}$

Samples of resin systems were prepared and tested as described for Examples 8 to 10 and comparative examples $C_7$ to $C_9$ using 33.5 grams of polyol; 66.5 grams of epoxide; and various anhydride hardeners. Relatively small quantities of catalyst were also added to the compositions. Resin system formulations and TSR values are summarized in Table IV below.

TABLE IV

| Example | $C_{10}$ | 11 | $C_{11}$ | 12 | $C_{12}$ | 13 | $C_{13}$ | 14 |
|---|---|---|---|---|---|---|---|---|
| Formulation | | | | | | | | |
| Epoxide (gms) | 66.5 | 66.5 | 66.5 | 66.5 | 66.5 | 66.5 | 66.5 | 66.5 |
| Polyol I (gms) | 33.5 | — | 33.5 | — | 33.5 | — | 33.5 | — |
| Polyol III (gms) | — | 33.5 | — | 33.5 | — | 33.5 | — | 33.5 |
| MTHPA (gms) | 66.6 | 66.6 | | | | | | |
| HHPA (gms) | | | 62.2 | 62.2 | | | | |
| MHHPA (gms) | | | | | 67.4 | 67.4 | | |
| MNA (gms) | | | | | | | 71.5 | 71.5 |
| BDMA (gms) | .85 | .85 | .85 | .85 | .85 | .85 | .85 | .85 |
| TSR | 6.1 | 6.6 | 5.7 | 6.8 | 4.0 | 4.1 | 1.1 | 1.4 |

**Claims**

1. A curable composition essentially liquid at 25°C, which comprises a blend of a cycloaliphatic epoxide

and/or diepoxide and at least 30 weight percent, based on the total weight of the polyol and epoxide components of a polycaprolactone polyol having a molecular weight of from about 500 to about 4,000, preferably from about 1,200 to about 1,300, produced by the ring opening reaction of a lactone with a polyfunctional initiator at a temperature of from 140 to 170°C for a period of 3 to 8 hours, wherein the minimum percent of lactone hydroxyls, y, in the polyester polyol is a function of the mole ratio, x, of lactone units to active hydrogens in the initiator, and is defined, as $y = 52.5x$ for $x > 0$ to 1.5 and $Y = 2.11x + 75.6$ for $x > 1.5$.

2. A curable composition as defined in claim 1 wherein the polyol has a molecular weight of from about 800 to about 2,000 and is produced by the ring opening reaction of epsilon-caprolactone with a multifunctional initiator which is diethylene glycol or neopentyl glycol.

3. A curable composition as defined in any one of claims 1 or 2 wherein the epoxide is 3,4-epoxycyclohexylmethyl-3,4-epoxycyclohexane carboxylate.

4. A curable composition as defined in any one of claims 1 to 3 wherein the composition further comprises a carboxylic acid or anhydride hardener, preferably selected from the group consisting of hexahydrophthalic anhydride, methyltetrahydrophthalic anhydride, methylhexahydrophthalic anhydride and methyl nadic anhydride.

5. The curable composition as defined in claim 4 which further comprises a curing catalyst and/or fiber and or filler.

6. A molding composition essentially liquid at 25°C, which comprises a blend of from about 45 to about 95 percent by weight, based on the total weight of the polyol and epoxide components, of a cycloaliphatic epoxide and/or diepoxide and from about 5 to about 55 percent by weight, based on the total weight of the polyol and epoxide components, of a polycaprolactone polyol having a molecular weight of from about 800 to about 2,000 produced by the ring opening reaction of epsilon-caprolactone with diethylene glycol at a temperature of 140—170°C for a period of 3 to 8 hours, wherein the minimum percent of lactone hydroxyls, y, in the polyester polyol is a function of the mole ratio, x, of lactone units to active hydrogens in the initiator, and is defined, as $y = 52.5x$ for $x>0$ to 1.5 and $y = 2.11x + 75.6$ for $x > 1.5$.

7. A molding composition as defined in claim 6 which further comprises fiber and/or filler and optionally a carboxylic acid or anhydride hardener and a curing catalyst, if desired.

8. A curable composition, essentially liquid at 25°C which comprises a blend of from about 30 to about 50 percent by weight, based on the total weight of the polyol and epoxide components, of 3,4-epoxycyclohexylmethyl-3,4-epoxycyclohexane carboxylate, and from about 70 to about 50 weight percent by weight, based on the total weight of the polyol and epoxide components, of a polycaprolactone polyol having a molecular weight of about 1250, produced by the ring opening reaction of epsilon-caprolactone with diethylene glycol at a temperature of 140—170°C for a period of 3 to 8 hours, wherein the PLH value of the polycaprolactone polyol is at least about 96.

9. A curable composition as defined in claim 8 which further comprises fiber and/or filler and optionally a carboxylic acid or anhydride hardener.

10. The cured product of any one of claims 1 to 9.

**Patentansprüche**

1. Härtbare Masse, die bei 25°C im wesentlichen flüssig ist und die umfaßt: ein Gemisch aus einem cycloaliphatischen Epoxid und/oder Diepoxid und mindestens 30 Gew.-%, bezogen auf das Gesamtgewicht aus Polyol- und Epoxidkomponenten, eines Polycaprolactonpolyols mit einem Molekulargewicht von etwa 500 bis etwa 4000, vorzugsweise von etwa 1200 bis etwa 1300, hergestellt durch die Ringöffnungsreaktion eines Lactons mit einem polyfunktionellen Initiator bei einer Temperatur von 140 bis 170°C während eines Zeitraums von 3 bis 8 Studen, wobei der minimale Prozentsatz der Lactonhydroxylgruppen y in dem Polyesterpolyl eine Funktion ist des Molverhältnisses x von Lactoneinheiten zu aktivem Wasserstoff in dem Initiator und definiert ist als $y = 52{,}5\,x$ für $x > 0$ bis 1,5 und $y = 2{,}11\,x + 75{,}6$ für $x >$ als 1,5.

2. Härtbare Masse nach Anspruch 1, wobei das Polyol ein Molekulargewicht von etwa 800 bis etwa 2000 besitzt und hergestellt worden ist durch Ringöffnungsreaktion von ε-Caprolacton mit einem multifunktionellen Initiator, der Diethylenglykol oder Neopentylglykol ist.

3. Härtbare Masse nach einem der Ansprüche 1 oder 2, wobei das Epoxid 3,4 -Epoxycyclohexylmethyl-3,4-epoxycyclohexan-carboxylat ist.

4. Härtbare Masse nach einem der Ansprüche 1 bis 3, wobei die Masse ferner enthält einen Carbonsäure- oder Anhydridhärter, vorzugsweise ausgewählt aus der Gruppe bestehend aus Hexahydrophthalsäureanhydrid, Methyltetrahydrophthalsäureanhydrid, Methylhexahydrophthalsäureanhydrid und Methylnadinsäureanhydrid.

5. Härtbare Masse nach Anspruch 4, die zusätzlich einen Härtungskatalysator und/oder Fasern und/oder Füllstoffe enthält.

6. Formmasse die bei 25°C im wesentlichen flüssig ist und die umfaßt: ein Gemisch aus etwa 45 bis etwa 95 Gew.-%, bezogen auf das Gesamtgewicht der Polyol- und Epoxidkomponenten, eines cycloaliphatischen Epoxids und/oder Diepoxids und etwa 5 bis etwa 55 Gew.-%, bezogen auf das Gesamtgewicht der Polyol- und Epoxidkomponenten, eines Polycaprolactonpolyols mit einem Molekulargewicht von etwa 800 bis etwa 2000, hergestellt durch Ringöffnungsreaktion von ε-Caprolacton mit Diethylenglykol bei einer Temperatur von 140 bis 170°C während eines Zeitraums von 3 bis 8 Stunden, wobei der minimale

Gehalt an Lactonhydroxylgruppen y in dem Polyesterpolyol eine Funktion ist des Molverhältnisses x der Lactoneinheiten zu aktivem Wasserstoff in dem Initiator und definiert ist als y = 52,5 für x >0 bis 1,5 und 2,11 x + 75,6 für x >1,5.

7. Formmasse nach Anspruch 6, die ferner enthält Fasern und/oder Füllstoffe und gegebenenfalls einen Carbonsäure- oder Anhydridhärter und einen Härtungskatalysator, soweit dies erwünscht ist.

8. Härtbare Masse, die bei 25°C im wesentlichen flüssig ist und die umfaßt: ein Gemisch aus etwa 30 bis etwa 50 Gew.-%, bezogen auf das Gesamtgewicht der Polyol- und Epoxidkomponenten, an 3,4-Epoxycyclohexylmethyl-3,4-epoxycyclohexan-carboxylat und etwa 70 bis etwa 50 Gew.-%, bezogen auf das Gesamtgewicht an Polyol- und Epoxidkomponenten, an einem Polycaprolactonpolyol mit einem Molekulargewicht von etwa 1250, hergestellt durch Ringöffnungsreaktion von ε-Caprolacton mit Diethylenglykol bei einer Temperatur von 140 bis 170°C während eines Zeitraums von 3 bis 8 Studen, wobei der PLH-Wert des Polycaprolactonpolyols zumindest 96 beträgt.

9. Härtbare Masse nach Anspruch 8, die ferner enthält Fasern und/oder Füllstoffe und gegebenenfalls einen Carbonsäure- oder Anhydridhärter.

10. Gehärtetes Produkt nach einem der Ansprüche 1 bis 9.

**Revendications**

1. Composition durcissable essentiellement liquide à 25°C, qui comprend un mélange d'un époxyde et/ou d'un diépoxyde cycloaliphatiques et d'au moins 30% en poids, sur la base du poids total des composants polyol et époxyde, d'un polycaprolactone-polyol ayant un poids moléculaire d'environ 500 à environ 4000, de préférence d'environ 1200 à environ 1300, produit par la réaction de décyclisation d'une lactone avec un initiateur polyfonctionnel à une température de 140 à 170°C pendant une période de 3 à 8 heures, le pourcentage minimal *y* de groupes hydroxyle de lactone, dans le polyester-polyol, étant fonction du rapport molaire *x* des motifs de lactone aux atomes actifs d'hydrogène dans l'initiateur, et étant défini par la relation y = 52,5x pour x>0 à 1,5 et y = 2,11x + 75,6 pour x>1,5.

2. Composition durcissable suivant la revendication 1, dans laquelle le polyol a un poids moléculaire d'environ 800 à environ 2000 et est produit par la réaction de décyclisation de l'epsilon-caprolactone avec un initiateur multifonctionnel qui est le diéthylène-glycol ou le néopentyl-glycol.

3. Composition durcissable suivant l'une quelconque des revendications 1 ou 2, dans laquelle l'époxyde est le 3,4-époxycyclohexane-carboxylate de 3,4-époxycyclohexylméthyle.

4. Composition durcissable suivant l'une quelconque des revendications 1 à 3, qui comprend en outre un durcisseur du type acide ou anhydride d'acide carboxylique, de préférence choisi dans le groupe comprenant l'anhydride hexahydrophtalique, l'anhydride méthyltétrahydrophtalique, l'anhydride méthylhexahydrophtalique et l'anhydride méthylnadique.

5. Composition durcissable suivant la revendication 4, qui comprend en outre un catalyseur de durcissement et/ou une matière fibreuse et/ou une charge.

6. Composition moulable essentiellement liquide à 25°C, qui comprend un mélange d'environ 45 à environ 95% en poids, sur la base du poids total des composants polyol et époxyde, d'un époxyde et/ou d'un diépoxyde cycloaliphatiques et d'environ 5 à environ 55% en poids, sur la base du poids total des composants polyol et époxyde, d'un polycaprolactone-polyol ayant un poids moléculaire d'environ 800 à environ 2000 produit par la réaction de décyclisation de l'epsilon-caprolactone avec le diéthylèneglycol à une température de 140 à 170°C pendant une période de 3 à 8 heures, le pourcentage minimal *y* de groupes hydroxyle de lactone dans le polyester-polyol étant fonction du rapport molaire *x* des motifs de lactone aux atomes actifs d'hydrogène dans l'initiateur et étant défini par la relation y = 52,5x pour x>0 à 1,5 et y = 2,11x + 75,6 pour x>1,5.

7. Composition moulable suivant la revendication 6, qui comprend en outre une matière fibreuse et/ou une charge et, à titre facultatif, un agent durcissant de type acide ou anhydride d'acide carboxylique et un catalyseur de durcissement, le cas échéant.

8. Composition durcissable, essentiellement liquide à 25°C, qui comprend un mélange d'environ 30 à environ 50% en poids, sur la base du poids total des composants polyol et époxyde, de 3,4-époxycyclohexane-carboxylate de 3,4-époxycyclohexylméthyle et environ 70 à environ 50% en poids, sur la base du poids total des composants polyol et époxyde, d'un polycaprolactone-polyol ayant un poids moléculaire d'environ 1250, produit par la réaction de décylisation de l'epsilon-caprolactone avec le diéthylène-glycol à une température de 140 à 170°C pendant une période 3 à 8 heures, la valeur HLP du polycaprolactone-polyol étant d'au moins environ 96.

9. Composition durcissable suivant la revendication 8, qui comprend en outre une matière fibreuse et/ou charge et, à titre facultatif, un agent durcisseur du type acide ou anhydride d'acide carboxylique.

10. Le produit à l'état durci suivant l'une quelconque des revendications 1 à 9.